# EUROPEAN PATENT APPLICATION

(11) **EP 1 617 639 A1**
(43) Date of publication of application: **18.01.2006**
(21) Application number: 05254362.6
(22) Date of filing: 12.07.2005
(51) Int. Cl.: H04M 1/725, H04N 7/14, H04Q 7/32

(54) **Remotely triggering multi-media data delivery in mobile communications devices**

(30) Priority: 12.07.2004 US 889690
(71) Applicant: OmniVision Technologies, Inc., Sunnyvale, California 94089 (US)
(72) Inventor: Shieh, Peter F, Foster City, California 94404 (US)
(74) Representative: Hackney, Nigel John

(57) **Abstract**

The use of messaging systems such as multimedia messaging system (MMS) and short message system (SMS) for remotely triggering a camera-equipped mobile communications device to capture multimedia data and sending the captured multimedia data to a remote communications device is disclosed.

## Description

The present invention is directed to mobile communications, and more specifically to remotely triggering multimedia data delivery in the context of mobile communications.

Mobile communications technologies such as the 2.5G technology lack the infrastructure for supporting a call setup for real-time video connections. Thus, for video conferencing and monitoring applications to be possible using 2.5G networks, a method for setting up a video connection between 2 communicating devices in the 2.5G network is needed. Further, handheld mobile communications devices are easily misplaced. A method is needed to locate the misplaced handheld mobile communications device.

In a first aspect, the present invention provides a method and system according to Claims 1 and 22 respectively.

### BRIEF DESCRIPTION OF THE DRAWINGS

FIG. 1 is a high-level block diagram that illustrates some of the logical components of a mobile communications device.
FIG. 2 is a high-level block diagram that illustrates the remote triggering of multimedia delivery by a mobile communications device, according to certain embodiments of the invention.

### DETAILED DESCRIPTION

Mobile communications devices can be used for myriad auxiliary applications such as uses as video conferencing. However, due to the current limitations in the 2G network such as GSM and CDMA (Global System for Mobile communications, Code Division Multiple Access) and 2.5G network such as GPRS and EDGE (General Packet Radio Service, Enhanced Data GSM Environment), real-time video transmission cannot be achieved using either a circuit-switched network or a packet-switched network alone. Some of the limitations include the following:
- Circuit-switched networks, currently used for voice transmissions, are limited by the available bandwidth. For example, 3G circuit-switched networks are limited to 64 kbps and the 2G and 2.5G networks are limited to about 9.6 kbps. Real-time video transmission (streaming video) normally requires more than 40 kbps to enable a reasonable Quarter Common Intermediate Format (QCIF) data rate at about 10 frames per second and where each frame contains 176 X 144 pixels.
- The call setup for packet-switched in the context of a mobile network does not exist.
- Packet-switched networks cannot be used in conjunction with circuit-switched networks at the same time using current technology. Thus, mobile device video conferencing cannot be performed using both networks at the same time.

To enable video streaming over a 2.5G network, a mechanism is needed to establish a video connection using the extant 2,5G infrastructure.

A triggering mechanism can be integrated with a mobile communications device to establish a call-setup for a video connection between the triggered mobile communications device and another communications device, according to certain embodiments. According to certain embodiments, such a triggering mechanism is also used for remotely activating the mobile communications device. For example, a misplaced mobile communications device can be activated to relay information about its surroundings to enable discovery of the misplaced device. According to certain embodiments, the triggering mechanism used for remotely activating the mobile communications device can be used to activate the mobile communications device to be a room monitor.

According to certain embodiments, a monitoring module can be loaded or implanted onto a camera-equipped mobile communications device such as a camera-equipped mobile phone. The monitoring module is adapted to constantly listen for incoming special command messages at the messaging mailboxes that are associated with and accessible by the mobile communications device. The messaging mailboxes can be but are not limited to Short Message System (SMS) and/or Multimedia Messaging System (MMS) mailboxes. The types of messaging mailboxes may vary from limitation to limitation.

According to one aspect of certain embodiments, when the monitoring module detects, at the SMS or MMS mailbox, an incoming special command message that contains a remote command to commence monitoring or to commence video conferencing, the monitoring module activates the camera and/or microphone of the mobile communications device to commence capturing multimedia data. The incoming message can be sent from a remote host. The incoming message may also contain a pre-arranged security password and/or security passkey so as to only allow authorized remote host devices to send special command messages to the mobile communications device. The remote host device can be a computer or another mobile communications device.

According to certain other aspects, the monitoring module causes the mobile communications device to capture and transmit still images and/or audio data of the surrounding environment when it is desired to remotely monitor the surrounding environment where the mobile communications device is located. Further, the transmitted still images and/or'audio data of the surrounding environment can provide useful information for locating the mobile communications device if the mobile communications device is misplaced. The monitoring module can also cause the mobile communications device to capture and stream video data of the surrounding environment.

According to certain embodiments, in the case of video conferencing, the monitoring module can cause a call-setup for a video connection to be established between the triggered mobile communications device and the remote host device that sent the special command messages. Audio and text messages can also be transmitted between the mobile communications device and the remote monitoring host. For video conferencing, real-time video can be streamed between the camera-equipped mobile communications device and the remote monitoring host using either the SMS or MMS triggered packet-switched network. Video can be streamed through the packet-switched network using either a direct video connection or an intermediate gateway.

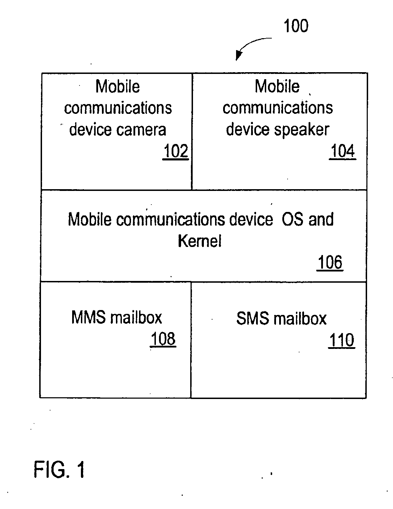

FIG. 1 is a high-level block diagram that illustrates some of the logical components of a mobile communications device. In FIG. 1, mobile communications device comprises a camera 102, a speaker or microphone 104, and operating system (OS) and kernel 106, an MMS mailbox 108 and an SMS mailbox 110.

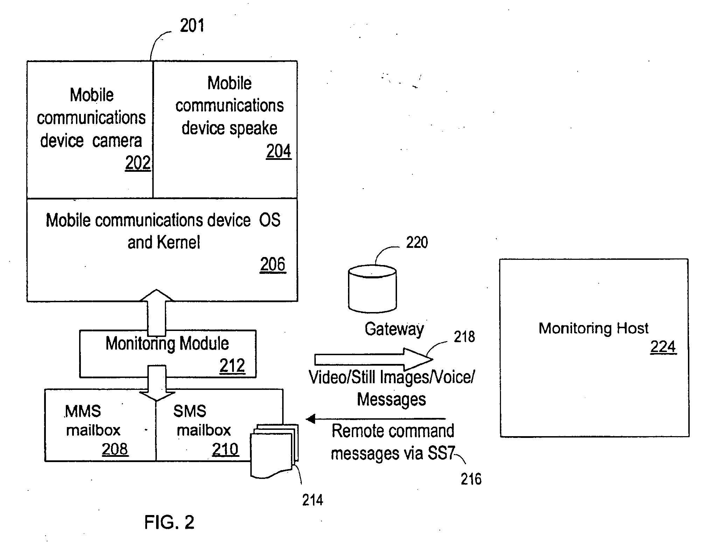

FIG. 2 is a high-level block diagram that illustrates the remote triggering of multimedia delivery by a mobile communications device, according to certain embodiments of the invention. In FIG. 2, mobile communications device 201 comprises a camera 202, a speaker or microphone 204, and operating system (OS) and kernel 206, an MMS mailbox 208, an SMS mailbox 210, and a monitoring module 212. FIG. 2 also shows a monitoring host 224, such as a computer or another communications device (i.e., another mobile phone, for example).

Monitoring module 212 is adapted to constantly listen to the MMS mailbox 208 and SMS mailbox 210 for incoming special command messages such as messages 214 sent by an authorized monitoring host such as monitoring host 224.

When monitoring host 224 desires either to commence monitoring the environment surrounding mobile communications device 201 or to commence video conferencing with the mobile communications device 201, monitoring host 224 sends a special remote command message 214 through the signaling system 7 (SS7) channel 216. SS7 is a global standard for telecommunications defined by the International Telecommunication Union (ITU). According to certain embodiments, the special remote command message 214 may also contain a pre-arranged security password and/or security passkey so as to only allow authorized remote host devices to send special command messages to the mobile communications device 201. For purposes of explanation, assume that special remote command message 214 is sent to MMS mailbox 208. When remote command message 214 reaches MMS mailbox 208, monitoring module 212 detects and acts upon the remote command message 214. Monitoring module 212 acts by communicating with operating system and kernel 206 to cause camera 202 and microphone 204 to activate and capture and transmit multimedia data of the surrounding environment. Depending on the type of remote command message, still pictures, audio data, and/or text messages may be transmitted. Alternatively, the remote command message may be such that video data is streamed to the remote monitoring host. FIG. 2 shows that multimedia data 218 can be transmitted to monitoring host 224 via gateway 220.

If remote monitoring host 224 desires to commence video conferencing with mobile communications device 201, then remote sends a remote command message either to the MMS mailbox 208 or the SMS mailbox 210. Upon detection of the remote command message received at the mailbox, the monitoring module 212 activates camera 202 and/or microphone 204 to commence capturing video data for streaming to remote monitoring host 224. Mobile communications device 201 can also receive streaming video from remote monitoring host 224. Real-time video can be streamed between the camera-equipped mobile communications device 201 and the remote monitoring host using either the MMS network or a packet-switched network. Video can be streamed through the packet-switched network using either a direct video connection or an intermediate gateway.

In the foregoing specification, embodiments of the invention have been described with reference to numerous specific details that may vary from implementation to implementation. The specification and drawings are, accordingly, to be regarded in an illustrative rather than a restrictive sense.

## Claims

1. A method for triggering multimedia data delivery in a camera-equipped mobile communications device, the method comprising the computer implemented acts of:
monitoring at least one mailbox for one or more incoming special command messages from a remote communications device, wherein said at least one mailbox is accessible by said camera-equipped mobile communications device; and
if said one or more incoming special command messages is received at said at least one mailbox, then triggering a call-set up on said camera-equipped mobile communications device with said remote communications device in response to said received one or more incoming special command messages.

2. The method of Claim 1, wherein said at least one mailbox is a mobile multimedia messaging service (MMS) mailbox.

3. The method of Claim 1, wherein said at least one mailbox is a short message service (SMS) mailbox.

4. The method of Claim 1, wherein said one or more incoming special command messages are sent from said remote communications device using a signaling system 7 (SS7) channel.

5. The method of Claim 1, wherein said one or more incoming special command messages includes a pre-arranged security password.

6. The method of Claim 1, wherein said one or more incoming special command messages includes a pre-arranged security passkey

7. The method of Claim 1, further comprising triggering a camera of said camera-equipped mobile communications device in response to said received one or more incoming special command messages.

8. The method of Claim 1, further comprising establishing a video connection for streaming real-time video data to said remote communications device.

9. The method of Claim 1, further comprising establishing a video connection for video conferencing between said camera-equipped mobile communications device and said remote communications device.

10. The method of Claim 9, wherein said camera-equipped mobile communications device uses 2.5G technology.

11. The method of Claim 10, wherein said 2.5G technology is GPRS.

12. The method of Claim 10, wherein said 2.5G technology is EDGE.

13. The method of Claim 9, wherein said camera-equipped mobile communications device uses 3G technology.

14. The method of Claim 9, further includes using a packet-switched network.

15. The method of Claim 1, further comprising monitoring an environment associated with a physical location of said camera-equipped mobile communications device by:
capturing image data of said environment using a camera in said camera-equipped mobile communications device; and
sending said image data to said remote communications device.

16. The method of Claim 1, further comprising sending multimedia to said remote communications device using mobile multimedia messaging service (MMS), wherein said multimedia comprises one or more of:
one or more still images;
audio data;
real-time video data; and
text messages.

17. The method of Claim 1, wherein said camera-equipped mobile communications device is a first camera-equipped mobile phone.

18. The method of Claim 1, wherein said camera-equipped mobile communications device is a first camera-equipped personal digital assistant (PDA).

19. The method of Claim 1, wherein said remote communications device is a computer.

20. The method of Claim 1, wherein said remote communications device is a second camera-equipped mobile phone.

21. The method of Claim 1, wherein said remote communications device is a second camera-equipped personal digital assistant (PDA).

22. A system for triggering multimedia data delivery in a camera-equipped mobile communications device by a remote communications device, the system comprising:
at least one electronic messaging mailbox accessible by said camera-equipped mobile communications device; and
a computer-implemented embedded application in said camera-equipped mobile communications device, wherein said embedded application is adapted for monitoring said at least one electronic messaging mailbox for one or more incoming special command messages from a remote communications device.

23. The system of Claim 22, wherein said at least one electronic mailbox is a mobile multimedia messaging service (MMS) mailbox.

24. The system of Claim 22, wherein said at least one electronic mailbox is a short message service (SMS) mailbox.

25. The system of Claim 22, wherein said one or more incoming special command messages are sent from said remote communications device using a signaling system 9 (SS7) channel.

26. The system of Claim 22, wherein said one or more incoming special command messages includes a pre-arranged security password.

27. The system of Claim 22, wherein said one or more incoming special command messages includes a pre-arranged security passkey

28. The system of Claim 22, wherein said embedded application triggers a camera of said camera-equipped mobile communications device in response to said received one or more incoming special command messages.

29. The system of Claim 22, wherein said embedded application establishes a video connection for streaming real-time video data to said remote communications device.

30. The system of Claim 22, wherein said embedded application establishes a video connection for video conferencing between said camera-equipped mobile communications device and said remote communications device.

31. The system of Claim 30, wherein said camera-equipped mobile communications device uses 2.5G technology.

32. The system of Claim 30, wherein said camera-equipped mobile communications device uses 3G technology.

33. The system of Claim 30, further includes using a packet-switched network.

34. The system of Claim 22, wherein said embedded application monitors an environment associated with a physical location of said camera-equipped mobile communications device by:
capturing image data of said environment using a camera in said camera-equipped mobile communications device; and
sending said image data to said remote communications device.

35. The system of Claim 22, further comprising sending multimedia to said remote communications device using mobile multimedia messaging service (MMS), wherein said multimedia comprises one or more of:
one or more still images;
audio data;
real-time video data; and
text messages.

36. The system of Claim 22, wherein said camera-equipped mobile communications device is a first camera-equipped mobile phone.

37. The system of Claim 22, wherein said camera-equipped mobile communications device is a first camera-equipped personal digital assistant (PDA).

38. The system of Claim 22, wherein said remote communications device is a computer.

39. The system of Claim 22, wherein said remote communications device is a second camera-equipped mobile phone.

40. The system of Claim 22, wherein said remote communications device is a second camera-equipped personal digital assistant (PDA).
